# FASCICULE DE BREVET EUROPEEN

(11) **EP 0 692 900 B1**
(45) Date de publication et mention de la délivrance du brevet: **18.07.2001**
(21) Numéro de dépôt: 95401413.0
(22) Date de dépôt: 16.06.1995
(51) Int. Cl.: H04M 1/68

(54) **Procédé pour surveiller le bon état de fonctionnement d'une installation téléphonique permettant d'échanger des informations**
Verfahren zur Überwachung des Funktionszustandes einer Fernsprechstation mit Möglichkeit zum Austausch von Daten
Method for monitoring the functioning ability of a telephone installation with data exchange possibility

(30) Priorité: 13.07.1994 FR 9408717
(43) Date de publication de la demande: 17.01.1996
(73) Titulaire: AMPHITECH Société à responsabilité limitée, 75011 Paris (FR)
(72) Inventeur: Wehrbach, Alain Paul René, F-94370 Sucy en Brie (FR)
(74) Mandataire: Vander-Heym, Serge

(56) Documents cités:
- EP-A- 0 268 717
- EP-A- 0 571 291
- WO-A-94/11948
- FR-A- 2 674 397
- US-A- 4 634 813
- US-A- 4 969 178

## Description

La présente invention est relative à un procédé pour surveiller le bon état de fonctionnement d'une installation permettant d'échanger des informations.

L'invention concerne aussi des moyens permettant la mise en oeuvre du procédé.

Les documents EP-A-0268717 et US-A-4634813 décrivent des dispositifs permettant de surveiller le bon état de fonctionnement d' une installation téléphonique. Dans le premier, il est décrit un dispositif permettant d'empêcher des appels par des personnes non autorisées. Dans le second, il est décrit un dispositif permettant de s'opposer aux écoutes intempestives.

Le but de la présente invention est différent. L'invention a pour but un dispositif permettant de surveiller le bon état de fonctionnement de la ligne reliant le boîtier de connexion au poste téléphonique et le poste lui-même.

Le procédé de l'invention est du genre de ceux consistant à mesurer les paramètres de l'ensemble ligne et poste téléphonique, la ligne étant déconnectée du réseau, à comparer les résultats obtenus avec des valeurs prédéterminées, le procédé étant caractérisé en ce que la mesure des paramètres, à l'aide d'une électronique centrale appropriée ou ELC, est quasi permanente et seulement interrompue pour reconnecter automatiquement la ligne sur le réseau si un signal d'appel est détecté pour cette ligne ou s i le combiné passe à l'état décroché et en ce que les valeurs prédéterminées des paramètres sont celles mesurées lors de la première mise en service de l'installation.

Dans tout ce qui va suivre, et par définition, l'expression "boîtier" signifie qu'il s'agit d'une enceinte protégée de laquelle part une ligne reliée à un poste téléphonique et que l'expression "ligne extérieure" est la ligne qui en provenance d'un central, est connectée au boîtier. Il y a lieu de. préciser que l'expression "ligne" signifie la ligne qui relie le boîtier au poste téléphonique.

Selon une autre caractéristique de l'invention la surveillance de la boucle du poste et du combiné s'effectue à partir d'une seconde électronique, disposée dans le poste, ci-après dénommée électronique poste ou ELP, placée sous la dépendance de l'ELC et alimentée à partir d'elle à travers la ligne.

La présente invention sera mieux comprise par la description qui va suivre faite en se référant au dessins annexés, à titre d'exemple indicatif seulement, sur lesquels
- la figure 1 est le schéma de l'ELC
- la figure 2 est le schéma de l'ELP
- la figure 3 est le schéma de l'ELC lorsque l'installation de surveillance comporte une ELP.

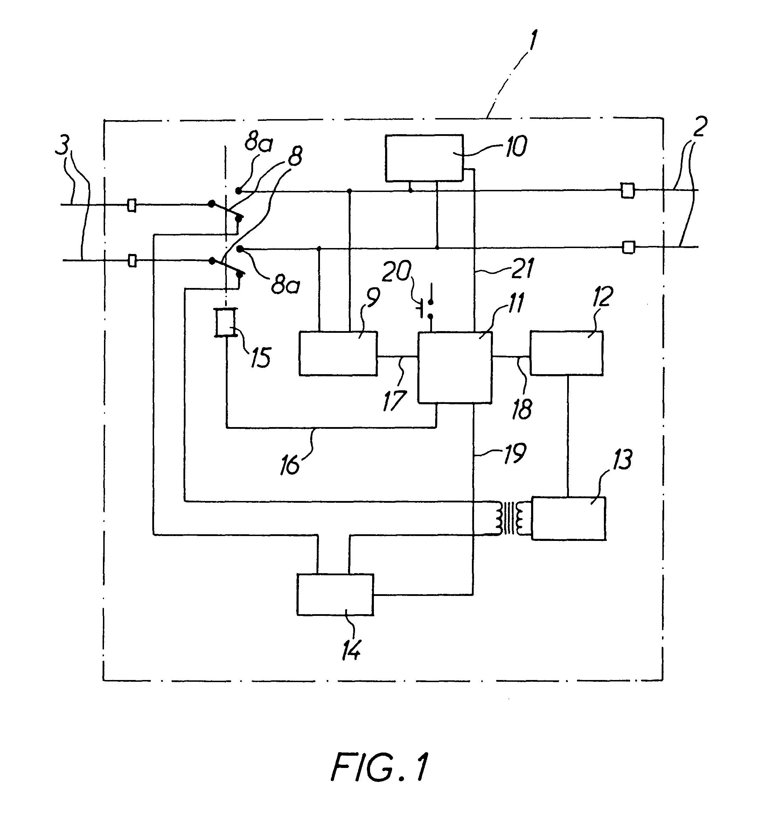

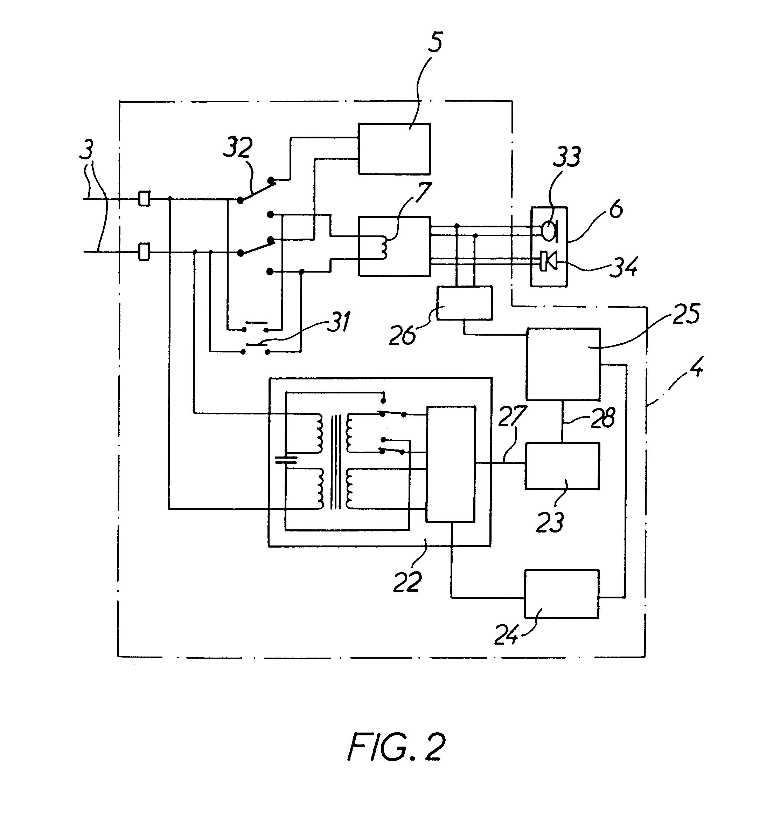

En se reportant à la figure 1 on voit que 1 schématise un boîtier de connexion auquel aboutit la ligne extérieure 2 en provenance, par exemple, d'un central du réseau France Télécom, et que 3 est la ligne reliée au poste abonné. Le poste abonné, qui est schématisé en 4 sur la figure 2, comporte la sonnerie 5 , le combiné 6 et le poste schématisé par sa boucle 7.

L'électronique centrale, ou ELC, se compose d'un interrupteur 8, d'un détecteur d'appel 9, d'un détecteur de fréquences vocales et de tonalité 10. d'un microprocesseur 11. dénommé ci-après "MP 11", d'un convertisseur 12. d'un amplificateur 13. et d'un organe de mesure 14. L'ELC est complétée par une alimentation, non représentée, délivrant l'énergie nécessaire au fonctionnement des organes décrits ci-dessus.

Durant la surveillance, qui s'exerce en l'absence de comunication, les contacts de l'interrupteur 8 sont dans la position représentée sur la figure 1, la bobine 15 étant excitée par la liaison 16.

Le détecteur d'appel 9 est connecté entre les bornes d'arrivée de la ligne 2 et les contacts 8a de repos du relais 8-15.

Le détecteur d'appel réagit à une tension alternative dont les caractéristiques sont celles du réseau. Dans le cas d'un réseau France Télécom, l'appel se traduit par un signal cadencé de 50 hertzs présent pendant 1,5 secondes et absent pendant 3,5 secondes. Si un tel signal est détecté, l'information est transmise par la liaison 17 au MP 11 qui fait basculer le relais 8-15 : la liaison entre le poste abonné et l'extérieur est alors possible.

En l'absence d'appel, le MP 11 génère un train d'ondes carrées sous une fréquence supérieure à 50 hertzs mais suffisamment basse pour éviter l'affaiblissement du signal dans la ligne. La cadence de ce train d'ondes est choisie de façon à ne pas risquer de déclencher la sonnerie 5. A titre d'exemple, la fréquence utilisée est de 1 kilohertz et la cadence est de 80 millisecondes (signal présent pendant 80 ms et absent pendant 80ms).

Ce signal cadencé est appliqué, par la liaison 18, au convertisseur 12 qui le transforme en signal alternatif de même fréquence et de même cadence.

Ce signal est amplifié par l'amplificateur 13 et est envoyé vers le poste abonné par la ligne 3 avec interposition de l'organe de mesure 14. L'organe 14 mesure la consommation d'énergie dans la boucle formée par la ligne 3 et la sonnerie 5 et transmet cette information, par la liaison 19, au MP 11 qui compare l'information reçue à celle stockée en mémoire. Si il y a inégalité, le MP 11 déclenche une alarme.

L'expérience a montré que d'une installation à l'autre la longueur de la ligne était toujours différente et que d'un poste à l'autre les caractéristiques de la sonnerie étaient, aussi, différentes. De ce fait, le paramètrage du MP 11 était très difficile à faire.

Selon l'invention, les caractéristiques de la boucle précitée sont enregistrées dans la mémoire du MP 11 lors de la mise en service de l'installation. La manoeuvre de l'interrupteur manuel 20 permet d'appliquer au MP11 une tension qui constitue l'ordre d'enregistrer le résultat de la mesure. Il est ainsi possible d'enregistrer différents états du système que le combiné soit accroché ou déccroché.

Durant la phase de surveillance, l'organe 14 transmettra au MP 11 les valeurs instantannées de la consommation dans la boucle précitée, étant entendu que cette transmission peut être faite selon une fréquence déterminée toutes les minutes par exemple.

Par le dispositif qui vient d'être décrit il est donc possible de surveiller l'état de la ligne et de la sonnerie du poste (courts-circuits ou coupures). Mais on peut aussi détecter le branchement d'un second poste abonné puisque dans ce cas la consommation d'énergie sera modifiée par la présence du second poste et des câbles de raccordement. D'une façon générale, il est possible de détecter tous raccordements d'appareils non prévus à l'origine.

Il est aussi possible de détecter le décrochage du combiné lorsque l'abonné veut lancer un appel. Dans ce cas, le MP11, le constate et fait basculer le relais 8-15 pour rétablir la ligne et permettre la communication. A la fin de la communication le détecteur 10 envoie un signal au MP 11, par la liaison 21, de façon à ce que ce dernier fasse basculer le relais 8-15 pour connecter l'organe de mesure 14 sur la ligne 3.

Le dispositif ci-dessus ne permet pas de contrôler le bouclage du poste ni l'état du combiné.

Pour effectuer la surveillance du bouclage et du combiné, l'invention prévoit d'utiliser une électronique, dénommée ci-après ELP, logée de préférence dans le socle 4 du poste. Selon une caractéristique importante de l'invention, l'ELP est alimentée, à partir de l'ELC, à travers la ligne 3.

L'ELP se compose d'une interface 22, d'un détecteur sélectif de fréquences 23, d'un amplificateur 24, d'un microprocesseur 25, ou "MP 25" et d'un convertisseur alternatif-continu 26.

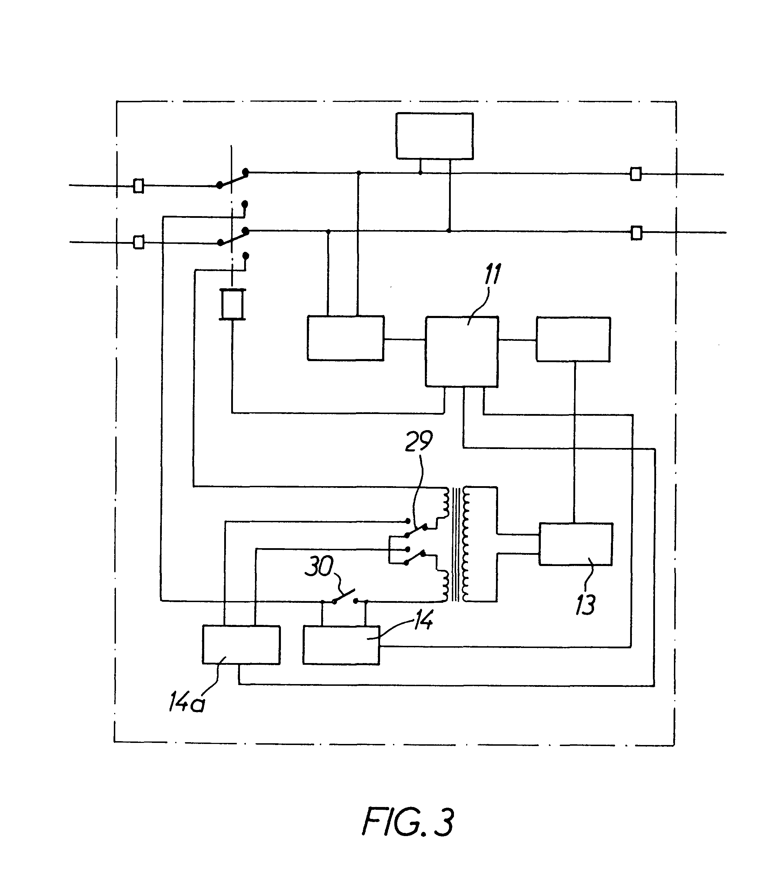

Lorsqu'on utilise une ELP, l'ELC est modifiée conformément au schéma de la figure 3. Cette modification se traduit par l'adjonction d'un organe de mesure en continu 14a et de moyens pour connecter soit l'organe 14 , soit celui 14a.

Lorsque le moment est venu de vérifier le bouclage du poste, l'ELC envoie un train d'ondes de même fréquence et de même cadence que celui précédent, mais dont l'amplitude est modifiée.

L'interface ligne comporte un convertisseur permettant d'alimenter en continu les autres organes de l'ELP.

L'interface 22 applique, par la liaison 27, le signal reçu au détecteur de fréquences 23. Si la fréquence est bonne, c'est-à-dire dans le présent exemple si la fréquence est de 1 kilohertz, il transforme ce signal en un signal carré et l'applique, par la liaison 28, au MP 25 qui analyse la cadence du signal. Si la cadence est bonne, c'est-à-dire dans le présent exemple si le signal est présent pendant 80 ms et absent pendant 80 ms, il en avise le MP11, par 24,22 et 3, en envoyant un signal alternatif qui est envoyé pendant la période de 80 ms ou aucun signal n'est présent dans la ligne 3.

A la réception de ce signal, le MP11 stoppe l'émission du signal "80-80 ms" et donne l'ordre au relais 29 de basculer pour connecter l'organe 14a à la ligne. Simultanément, il donne l'ordre de court-circuiter l'organe 14 par la fermeture du contact 30. Lorsque l'organe 14a est connecté, le MP11 donne l'ordre à l'alimentation d'appliquer une tension continue à l'organe 14a, une tension de 30 volts par exemple. A ce moment, la ligne est alimentée en continu à travers l'organe de mesure 14a et il est alors possible d'échanger des signaux codés entre l'ELC et l'ELP.

Lorsque ces opérations sont effectuées, le MP 11 envoie un signal codé qui constitue "l'ordre de mise en boucle" du poste. Le MP 25 accuse réception de cet ordre par l'envoi d'un signal codé. Si l'accusé de réception n'est pas reçu le MP 11 déclenche une alarme.

A la réception de l'ordre de "mise en boucle", le MP 25 donne l'ordre de fermeture du relais 31, ce qui a pour effet de court-circuiter le commutateur 32 du poste dont les contacts sont dans la position représentée sur la figure 3 lorsque le combiné 6 est accroché. Par un signal codé le MP 25 confirme que le bouclage est effectué. Comme précédemment, si l'accusé de réception n'est pas reçu par l'ELC, une alarme peut être déclenchée.

Après la mise en boucle, l'organe 14a mesure la consommation dans le circuit et transmet cette information au MP11. Si cette information est différente de celle stockée, initialement dans la mémoire du MP 11, une alarme est déclenchée.

Si l'information est bonne, le MP 11 envoie un signal de vérification du combiné. Comme précédemment, cet ordre peut être confirmé par le MP 25. A la réception de cet ordre, le MP 25, à travers l'organe 26, se connecte sur le haut-parleur 33 du combiné et émet un signal cadencé, à fréquence vocale et limité dans le temps (par exemple : signal présent pendant 500 ms et absent pendant 500 ms, cinq bits). Ce signal est transmis par l'air au microphone 34 et à travers le poste et l'interface 22 au MP25. A la réception de ce signal, le MP 25 avise, sous forme d'un signal codé, le MP 11 que la réception est bonne ou mauvaise. Si la réception est mauvaise le MP 11 déclenche une alarme.

Le cyle de vérifications est maintenant terminé et les organes de l'ELC et de l'ELP restent en l'état où ils se trouvent.

Périodiquement, toutefois, le MP 11 envoie un signal codé au MP25 pour s'assurer que l'ELP est toujours en veille. Si le MP 25 n'accuse pas réception, le MP 11 déclenche une alarme.

Un appel extérieur, ou le fait de décrocher le combiné, va mettre fin à cette situation. Lorsque la communication est terminée, tout le processus de surveillance recommence selon la même procédure.

Il faut signaler que le procédé de l'invention permet, aussi, de mettre en évidence un décrochage accidentel du combiné car, dans ce cas, il n'y a pas de fréquence vocale en ligne, mais il y a une tonalité. Cette situation est détectée par l'organe 10 qui en avise le MP 11, ce dernier déclenchant, alors, une alarme.

## Revendications

1. Procédé de surveillance du bon état de fonctionnement d'une ligne téléphonique à laquelle est connecté un poste téléphonique, le procédé consistant à mesurer les paramètres de l'ensemble ligne et poste téléphonique, la ligne étant déconnectée du réseau, à comparer les résultats obtenus avec des valeurs prédéterminées, le procédé étant caractérisé en ce que la mesure des paramètres, à l'aide d'une électronique centrale appropriée ou ELC, est quasi permanente et seulement interrompue pour reconnecter automatiquement la ligne sur le réseau si un signal d'appel est détecté sur cette ligne ou si le combiné passe à l'état décroché et en ce que les valeurs prédéterminées des paramètres sont celles mesurées à la première mise en service de l'installation.

2. Procédé selon la revendications 1, consistant à l'aide d'une seconde électronique ELP, située au niveau du poste, à surveiller la boucle dudit poste et le combiné.

3. Procédé selon la revendication 2, caractérisé en ce que l'énergie nécessaire au fonctionnement de l'ELP est délivrée à partir de l'alimentation de la première électronique ELC, à travers la ligne (3).

4. Procédé selon l'une quelconque des revendications 1 à 3, caractérisé en ce que l'ELC comporte un organe de mesure en alternatif (14) pour la surveillance de la ligne et de la sonnerie et un organe de mesure en continu (14a) pour la surveillance de la boucle, des moyens étant prévus pour basculer sur l'un ou l'autre desdits organes.

5. Procédé selon l'une quelconque des revendications 1 à 4 consistant, lorsque le moment est venu de vérifier la boucle du poste, à envoyer un signal de commande à l'ELP, qui est analysé par cette dernière, et s'il est reconnu en accuse réception à l'ELC pendant l'intervalle de temps où aucun signal n'est présent sur la ligne, ce signal de retour ayant pour effet, au niveau de l'ELC, de connecter l'organe de mesure en continu sur la ligne, cette dernière se trouvant alors alimentée en continu.

6. Procédé selon la revendication 5, consistant, après la vérification de la boucle, à vérifier le combiné par l'envoi, au niveau de l'ELP d'une fréquence vocale caractéristique dans le haut-parleur (32) du combiné qui est transmise, par l'air, au microphone, le signal reçu par ce dernier étant analysé au niveau de l'ELP qui informe l'ELC du résultat .

## Patentansprüche

1. Verfahren zur Überwachung der Funktionstüchtigkeit einer Telefonleitung, an die ein Telefonendgerät angeschlossen ist, wobei das Verfahren darin besteht, die Parameter des Aufbaus Leitung und Telefonendgerät zu messen, wobei die Leitung vom Netz abgetrennt ist, die erhaltenen Ergebnisse mit vorbestimmten Werten zu vergleichen, wobei das Verfahren dadurch gekennzeichnet ist, daß die Messung der Parameter mittels einer geeigneten elektronischen Zentrale oder ELC praktisch permanent ist und nur unterbrochen wird, um die Leitung wieder automatisch an das Netz anzuschalten, wenn ein Anrufsignal auf dieser Leitung entdeckt wird, oder wenn der Hörer in den abgenommenen Zustand übergeht, und dadurch, daß die vorbestimmten Werte der Parameter diejenigen sind, die bei der ersten Inbetriebnahme der Installation gemessen werden.

2. Verfahren gemäß Anspruch 1, darin bestehend, daß mittels einer sich auf der Höhe des Gerätes befindenden zweiten Elektronik ELP die Schleife des besagten Gerätes und der Hörer überwacht werden.

3. Verfahren gemäß Anspruch 2, dadurch gekennzeichnet, daß die zum Betrieb der ELP notwendigen Energie von der Versorgung der ersten Elektronik ELC aus über die Leitung (3) geliefert wird.

4. Verfahren gemäß Anspruch 1 bis 3, dadurch gekennzeichnet, daß die ELC ein Meßorgan im Wechselmodus (14) zur Überwachung der Leitung und des Läutwerks und ein Meßorgan im Durchgangsmodus (14a) für die Überwachung der Schleife umfaßt, wobei Mittel vorgesehen sind, um auf das eine oder das andere vorgenannte Organ umzustellen.

5. Verfahren gemäß Anspruch 1 bis 4, darin bestehend, daß, wenn der Moment gekommen ist, die Schleife des Gerätes zu überprüfen, ein Steuersignal an die ELP geschickt wird, das von dieser analysiert wird, und wenn es mit Empfangsbestätigung in der ELC während des zeitlichen Intervalls erkannt wird, in dem kein Signal in der Leitung vorhanden ist, hat dieses Rücksignal auf der Hohe der ELC die Verbindung des Meßorgans im Durchgangsmodus auf der Leitung zur Wirkung, wobei diese dann im Durchgangsmodus versorgt wird.

6. Verfahren gemäß Anspruch 5, darin bestehend, daß nach Überprüfung der Schleife der Hörer durch Übertragung auf der Höhe der ELP einer charakteristischen Stimmfrequenz in den Lautsprecher (32) des Hörers überprüft wird, die über die Luft in das Mikrophon übertragen wird, wobei das von diesem empfangene Signal auf der Höhe der ELP analysiert wird, die die ELC über das Ergebnis informiert.

## Claims

1. Method for monitoring the proper functioning of a telephone line to which a telephone set is connected, said method consisting of measuring the parameters of the telephone set and the line together, the line being disconnected from the network, of comparing the results obtained with predetermined values, said method being characterised in that the measurement of the parameters with the aid of an appropriate central electronics unit or ELC and almost continuous and only interrupted so as to automatically reconnect the line on the network if a ringing tone is detected on this line or if the handset becomes unhooked and in that the predetermined values of the parameters are the ones measured when the installation is the first put into service.

2. Method according to claim 1 and consisting using a second electronics unit ELP situated at the level of the set for monitoring the loop of said set and handset.

3. Method according to claim 2, characterised in that the energy required for functioning of the ELP is delivered from the power unit of the first electronics set ELC through the line (3).

4. Method according to one of claims 1 to 3, characterised in that the ELC comprises an alternative measuring element (14) for monitoring the line and bell set and a continuous measuring element (14a) for monitoring the loop, means being provided to tilt onto either of said elements.

5. Method according to one of claims 1 to 4 and consisting, when the time has arrived to check the loop of the station, of sending a control signal to the ELP, which is analysed by the latter, and if it is acknowledged as received at the ELC during the time interval where no signal is present on the line, this return signal having the effect at the level of the ELC of connecting the continuous measuring element on the line, the latter being then fed continuously.

6. Method according to claim 5 and consisting, after checking the loop, of checking the handset by sending at the level of the ELP a characteristic vocal frequency in the loud speaker (32) of the handset which is transmitted via the air to the microphone, the signal received by the latter being analysed at the level of the ELP which informs the ELC of the result.
